# FASCICULE DE BREVET EUROPEEN

(11) **EP 2 502 530 B1**
(45) Date de publication et mention de la délivrance du brevet: **21.05.2014**
(21) Numéro de dépôt: 12159339.6
(22) Date de dépôt: 13.03.2012
(51) Int. Cl.: A47J 27/21

(54) **Bouilloire comportant un couvercle muni d'un organe de préhension escamotable**
Kochtopf mit einem Deckel, der mit einem versenkbaren Greiforgan ausgestattet ist
Kettle comprising a lid provided with a retractable gripping element

(30) Priorité: 25.03.2011 FR 1152519
(43) Date de publication de la demande: 26.09.2012
(73) Titulaire: SEB S.A., 69130 Ecully (FR)
(72) Inventeur: Fradet, Gautier, 21120 Echevannes (FR)
(74) Mandataire: Bourrières, Patrice

(56) Documents cités:
- EP-A1- 1 479 947
- DE-A1- 19 623 616
- DE-U1- 9 204 887
- FR-A1- 2 696 087

## Description

La présente invention concerne un appareil de chauffage de liquides, notamment une bouilloire électrique, comportant un récipient muni d'une ouverture supérieure de remplissage qui est fermée par un couvercle.

Dans ce domaine, il existe différents types de fermeture de récipients par l'intermédiaire d'un couvercle.

On connait par exemple du brevet FR2696087, un dispositif de verrouillage d'un couvercle de bouilloire permettant de fermer le récipient selon un mouvement de translation sensiblement parallèle à l'axe du récipient. Le couvercle comporte sur sa face supérieure un corps saillant muni d'une bague rotative permettant de commander le déverrouillage du couvercle. La bague rotative fait office d'organe de préhension du couvercle.

Cependant, un appareil comportant un couvercle muni d'une telle excroissance n'est pas très esthétique. De plus, le nettoyage d'un tel couvercle n'est pas facile.

On connait également du brevet FR2810642 un dispositif de verrouillage d'un couvercle articulé sur un récipient. L'ouverture et la fermeture du couvercle sont actionnées par un bouton poussoir disposé sur le couvercle.

Ce type de dispositif fonctionne de façon satisfaisante. Cependant, de nombreuses bouilloires comportent un couvercle comprenant des fonctions supplémentaires qui alourdissent le couvercle. Dans ce cas, la bouilloire est instable lorsque le couvercle se relève. Parmi les fonctions supplémentaires embarquées dans le couvercle, on peut citer par exemple un dispositif de fermeture du bec verseur en cas de chute de la bouilloire par des masselottes. Un but de la présente invention est de remédier aux inconvénients précités et de proposer une bouilloire comportant un dispositif de verrouillage d'un couvercle sur un récipient permettant d'obtenir une esthétique du couvercle améliorée.

Un autre but de la présente invention est de proposer une bouilloire comportant un dispositif de verrouillage d'un couvercle sur un récipient permettant d'obtenir un couvercle facile à nettoyer.

Un autre but de la présente invention est de proposer une bouilloire présentant une ergonomie améliorée et une utilisation plus sûre.

Ces buts sont atteints avec une bouilloire comprenant un récipient, un couvercle et un dispositif de verrouillage du couvercle sur le récipient comportant des premiers moyens de verrouillage situés sur le récipient et des seconds moyens de verrouillage complémentaires, fixés au couvercle, mobiles par rapport audit couvercle entre une position de verrouillage du couvercle dans laquelle ils sont en prise avec les premiers moyens de verrouillage et une position de déverrouillage dans laquelle le couvercle est libéré, le dispositif de verrouillage comportant un organe de commande des seconds moyens de verrouillage disposé sur le couvercle, **caractérisé en ce que** l'organe de commande est intégré dans le couvercle lorsque les seconds moyens de verrouillage sont dans la position de verrouillage et en ce que l'organe de commande fait saillie au dessus du couvercle pour former un organe de préhension lorsque les seconds moyens de verrouillage sont dans la position de déverrouillage.

Une bouilloire munie d'un tel dispositif de verrouillage permet d'obtenir en position de verrouillage un couvercle présentant une surface supérieure lisse, au design épuré, sans partie saillante et facilement nettoyable.

Un tel dispositif de verrouillage permet d'obtenir en position de déverrouillage un couvercle dont l'organe de préhension devient visible et permet une manipulation aisée du couvercle.

Avantageusement, l'organe de commande est constitué par un bouton poussoir.

Cette disposition permet d'obtenir un organe de commande facile à manoeuvrer par simple pression.

Avantageusement, le récipient comporte un axe vertical et le bouton poussoir est manoeuvré selon un mouvement de translation sensiblement parallèle à l'axe vertical pour verrouiller ou déverrouiller le couvercle du récipient.

Cette disposition permet d'obtenir une très bonne stabilité de la bouilloire lors des manoeuvres du bouton poussoir.

De préférence, le couvercle est destiné à être assemblé sur le récipient selon un mouvement de translation sensiblement parallèle à l'axe du récipient.

Cette disposition permet d'obtenir un mouvement simple et intuitif d'assemblage du couvercle sur le récipient.

De préférence, le dispositif de verrouillage comporte un support et un capot qui comprennent, chacun, une zone de guidage du bouton.

Cette disposition permet de réaliser un très bon guidage du bouton.

De préférence, le récipient comporte des excroissances radiales qui constituent les premiers moyens de verrouillage complémentaires.

Avantageusement, les seconds moyens de verrouillage complémentaires comportent des bras mobiles par rapport au couvercle.

Ces dispositions permettent d'obtenir un verrouillage sûr du couvercle sur le récipient.

Avantageusement, le bouton poussoir comporte un bouton externe de verrouillage et un bouton interne de déverrouillage du couvercle.

Cette disposition permet de clairement dissocier les deux fonctions de verrouillage et de déverrouillage du couvercle sur le récipient.

De préférence, le couvercle comporte un dispositif de maintien du bouton externe dans la position de verrouillage et le bouton interne agit sur le dispositif de maintien pour libérer le bouton externe.

L'invention sera mieux comprise à l'étude du mode de réalisation pris à titre nullement limitatif et illustré dans les figures annexées dans lesquelles :
- La figure 1 illustre une vue en perspective d'une bouilloire munie d'un couvercle en position de déverrouillage selon un mode particulier de réalisation de l'invention.
- La figure 2 illustre une vue en perspective du couvercle de la bouilloire illustrée sur la figure 1 en position de verrouillage.
- La figure 3 illustre une vue en éclaté du couvercle de la bouilloire illustré sur la figure 1.
- La figure 4 illustre une vue en coupe IV-IV partielle du couvercle illustré sur la figure 1.
- La figure 5 illustre une vue en coupe V-V partielle du couvercle illustré sur la figure 2.

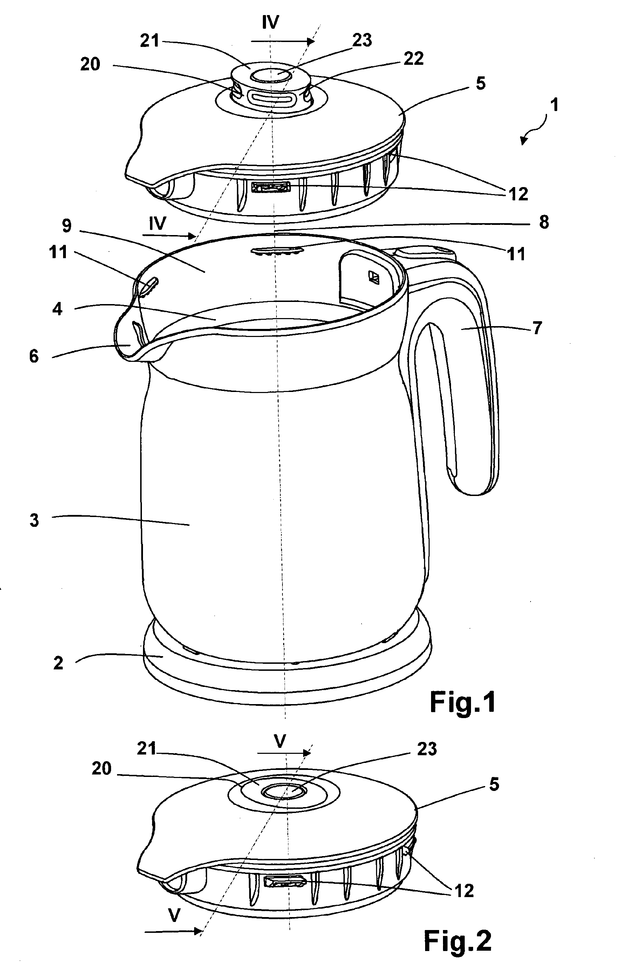

Dans l'exemple de réalisation représenté aux figures 1 et 2, une bouilloire 1 comporte un socle 2 alimenté électriquement par un cordon et un récipient 3 comprenant une ouverture supérieure 4 de remplissage qui est fermée par un couvercle 5. La bouilloire 1 comprend un bec verseur 6 situé au niveau de l'ouverture supérieure 4 et une poignée 7 située à l'opposé du bec verseur 6 par rapport à l'ouverture supérieure 4. Le récipient 3 a une forme sensiblement cylindrique comprenant un axe vertical 8.

Le couvercle 5 est amovible par rapport au récipient 3 et le couvercle 5 est destiné à être assemblé sur le récipient 3 selon un mouvement de translation sensiblement parallèle à l'axe vertical 8 du récipient.

La bouilloire 1 comporte un dispositif de verrouillage du couvercle 5 sur le récipient 3 qui comprend des premiers moyens de verrouillage situés sur le récipient 3 et des seconds moyens de verrouillage complémentaires agencés dans le couvercle 5.

Le récipient 3 comporte au niveau de l'ouverture supérieure 4 une paroi interne 9 de réception du couvercle 5, comprenant quatre excroissances 11 qui s'étendent radialement vers l'intérieur du récipient 3 et qui forment les premiers moyens de verrouillage. Le couvercle 5 comporte quatre verrous 12 mobiles radialement qui forment les seconds moyens de verrouillage complémentaires.

Les verrous 12 sont mobiles par rapport au couvercle 5 entre une position de verrouillage dans laquelle ils coopèrent avec les excroissances 11 pour rendre le couvercle 5 solidaire du récipient 3 et une position de déverrouillage dans laquelle ils sont décalés radialement vers l'intérieur du couvercle 5 par rapport aux excroissances 11 pour libérer le couvercle 5.

Le couvercle 5 comprend un bouton poussoir 20 de forme sensiblement cylindrique qui permet de commander les verrous 12 mobiles. Tel que visible à la figure 1, le bouton poussoir 20 fait saillie au dessus du couvercle 5 dans la position de déverrouillage des verrous 12 pour former un organe de préhension du couvercle. Tel que visible à la figure 2, le bouton poussoir 20 est intégré dans le couvercle 5 dans la position de verrouillage des verrous 12. Le bouton poussoir 20 comporte une face supérieure 21 qui constitue partiellement la face supérieure du couvercle 5 pour former une face lisse.

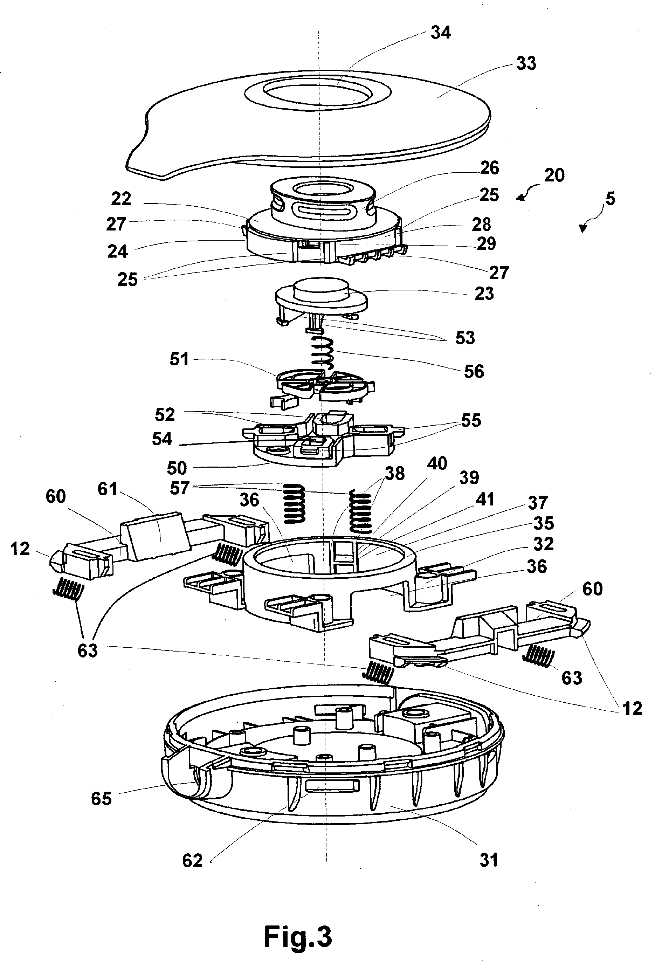

Comme on peut le voir à la figure 3, le couvercle 5 comporte une base 31, un support 32 et un capot 33 muni d'une ouverture centrale 34. Le support 32 est fixé sur la base 31 et est situé sous le capot 33. Le support 32 présente une forme de manchon cylindrique qui comporte une paroi 35 comprenant deux encoches inférieures 36 disposées de manière opposées. La paroi 35 comporte une face interne 37 munie de nervures axiales 38 et d'excroissances radiales 39. Chaque excroissance radiale 39 comprend une face inclinée 40 supérieure et une face de butée 41 inférieure.

Comme on peut le voir aux figures 3 à 5, le bouton poussoir 20 comporte un bouton externe 22 et un bouton interne 23. Le bouton externe 22 comprend une partie basse 24 cylindrique creuse, agencée dans le support 32. La partie basse 24 du bouton externe 22 comporte des nervures 25 qui coopèrent avec les nervures axiales 38 du support 32 pour assurer un coulissement axial du bouton externe 22 dans le support 32. Le bouton externe 22 comporte une partie haute 26 cylindrique de forme sensiblement annulaire qui est agencée de manière coulissante dans l'ouverture centrale 34 du capot 33. Ainsi, l'ouverture centrale 34 forme une zone de guidage de la partie haute 26 du bouton externe 22.

La partie basse 24 du bouton externe 22 comporte deux poussoirs 27 agencés de manière opposée et s'étendant radialement vers l'extérieur à travers les encoches inférieures 36 du support 32. La partie basse 24 du bouton externe 22 comporte une paroi périphérique 28 qui définit une cavité interne et qui comprend quatre ouvertures 29.

Le bouton interne 23 est agencé dans la partie haute 26 du bouton externe 22 et commande un dispositif de maintien du bouton externe 22 agencé dans la cavité de la partie basse 24 du bouton externe 22. Le dispositif de maintien comporte une platine inférieure 50, une platine supérieure 51 et quatre crochets 52 rétractables. Les platines inférieure 50 et supérieure 51 sont assemblées pour définir des logements dans lesquels les crochets 52 sont mobiles radialement entre une position rétractée et une position sortie. Quatre ressorts (non représentés sur les figures) rappellent les crochets 52 en position sortie. Le bouton interne 23 comporte quatre rampes inclinées 53 qui s'étendent vers le bas et qui coopèrent chacune avec une zone inclinée 54 de chaque crochet 52. Une pression sur le bouton interne 23 provoque un déplacement vers le bas des rampes inclinées 53 qui amènent les crochets 52 en position rétractée. Les crochets 52 comportent des doigts d'extrémité 55 qui coulissent à l'intérieur des ouvertures 29 pour coopérer avec les faces de butée 41 des excroissances radiales 39 du support 32. Lorsque les doigts d'extrémité 55 sont glissés sous les faces de butée 41, le bouton externe 22 est maintenu en position de verrouillage illustrée à la figure 2.

Le dispositif de maintien du bouton externe 22 comporte un ressort de rappel 56 du bouton interne 23 disposé entre la platine supérieure 51 et le bouton interne 23. Deux ressorts 57 sont disposés entre la base 31 du couvercle 5 et la platine inférieure 50 pour assurer le retour du bouton poussoir 20 en position saillante de déverrouillage.

Comme on peut le voir à la figure 3, deux bras 60 coulissants agencés dans la base 31 de manière opposée comportent deux zones inclinées 61 qui coopèrent avec les poussoirs 27 du bouton externe 22. Les bras 60 comportent à leurs extrémités les verrous 12. Dans la position de verrouillage, les verrous 12 s'étendent vers l'extérieur de la base 31 à travers des ouvertures 62 pour coopérer avec les excroissances 11 du récipient 3. Dans la position de déverrouillage du couvercle 5, les verrous 12 sont rappelés à l'intérieur de la base 31 par quatre ressorts 63.

La base 31 du couvercle 5 comporte un conduit 65 qui relie l'intérieur du récipient 3 au bec verseur 6. Une masselotte pendulaire (non représentée sur les figures) montée pivotante dans la base 31 du couvercle 5 permet d'obstruer le conduit 65 en cas de renversement de la bouilloire.

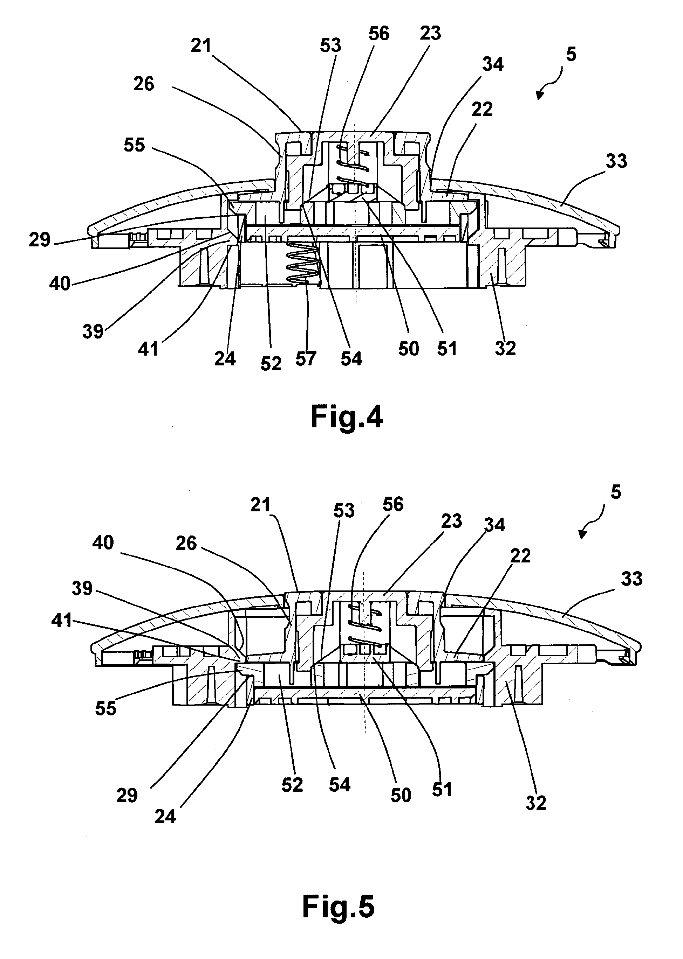

Les figures 4 et 5 illustrent des vues en coupe partielle du couvercle et ne comportent pas la base 31, les bras 60 et les ressorts 63.

En fonctionnement, pour verrouiller le couvercle 5 sur le récipient 3, l'utilisateur appuie sur le bouton poussoir 20 qui coulisse vers le bas suivant l'axe du couvercle. Pendant le déplacement du bouton poussoir 20, les poussoirs 27 du bouton externe 22 prennent appui sur les zones inclinées 61 des bras 60 qui se déplacent latéralement. Ainsi, les verrous 12 coulissent et s'engagent sous les excroissances 11 du récipient 3 pour verrouiller le couvercle 5 sur le récipient 3.

Dans le même temps, pendant le déplacement du bouton poussoir 20, les doigts d'extrémités 55 des crochets 52 glissant sur les faces inclinées 40 vont faire reculer les crochets 52. Une fois les excroissances radiales 39 dépassées, les doigts d'extrémités 55 des crochets 52 se glissent sous les faces de butée 41 pour maintenir le bouton externe 22 en position de verrouillage illustrée à la figure 5.

Pour déverrouiller le couvercle 5, l'utilisateur appuie sur le bouton interne 23 qui coulisse vers le bas. Les rampes inclinées 53 du bouton interne 23 font alors reculer les crochets 52 dont les doigts d'extrémités 55 vont se désengager des faces de butée 41 des excroissances radiales 39 pour libérer le bouton externe 22. Sous l'action des ressorts 57, le bouton externe 22 se déplace vers le haut pour faire apparaître la partie haute 26 qui fait office d'organe de préhension ainsi que cela est illustré à la figure 4. Le déplacement du bouton externe 22 et l'action des ressorts 63 provoquent le retrait horizontal des bras 60 coulissants et des verrous 12 qui se désengagent des excroissances 11 pour déverrouiller le couvercle 5. L'utilisateur peut alors saisir l'organe de préhension pour ôter le couvercle 5 du récipient 3.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation non représentée, le bouton poussoir pourra ne pas comporter de bouton interne mais un bouton externe dont la face supérieure ne présente pas d'ouvertures. Le dispositif de positionnement du bouton externe peut être réalisé par un système de roue à rochet tel que celui que l'on peut trouver dans les stylos à bille.

## Revendications

1. Bouilloire (1) comprenant un récipient (3), un couvercle (5) et un dispositif de verrouillage du couvercle (5) sur le récipient (3) comportant des premiers moyens de verrouillage (11) situés sur le récipient (3) et des seconds moyens de verrouillage (12) complémentaires fixés au couvercle (5), mobiles par rapport audit couvercle (5) entre une position de verrouillage du couvercle (5) dans laquelle lesdits seconds moyens de verrouillage (12) sont en prise avec les premiers moyens de verrouillage (11) et une position de déverrouillage dans laquelle le couvercle (5) est libéré, ledit dispositif de verrouillage comportant un organe de commande (20) des seconds moyens de verrouillage (12) disposé sur le couvercle (5), **caractérisé en ce que** l'organe de commande (20) est intégré dans le couvercle (5) lorsque les seconds moyens de verrouillage (12) sont dans la position de verrouillage et **en ce que** l'organe de commande (20) fait saillie au dessus du couvercle (5) pour former un organe de préhension lorsque les seconds moyens de verrouillage (12) sont dans la position de déverrouillage.

2. Bouilloire (1) selon la revendication 1, **caractérisée en ce que** l'organe de commande est constitué par un bouton poussoir (20).

3. Bouilloire (1) selon la revendication 2, **caractérisée en ce que** le récipient (3) comporte un axe vertical (8) et **en ce que** le bouton poussoir (20) est manoeuvré selon un mouvement de translation sensiblement parallèle à l'axe vertical (8) pour verrouiller ou déverrouiller le couvercle (5) du récipient (3).

4. Bouilloire (1) selon l'une quelconque des revendications 1 à 3, **caractérisée en ce que** le couvercle (5) est destiné à être assemblé sur le récipient (3) selon un mouvement de translation sensiblement parallèle à l'axe vertical (8) du récipient (3).

5. Bouilloire (1) selon l'une quelconque des revendications 2 à 4, **caractérisée en ce que** le dispositif de verrouillage comporte un support (32) et un capot (33), chacun comprenant une zone de guidage (38, 34) du bouton poussoir (20).

6. Bouilloire (1) selon l'une quelconque des revendications 1 à 5, **caractérisée en ce que** le récipient (3) comporte des excroissances (11) radiales qui constituent les premiers moyens de verrouillage complémentaires.

7. Bouilloire selon l'une quelconque des revendications 1 à 6, **caractérisée en ce que** les seconds moyens de verrouillage complémentaires comportent des bras (60) mobiles radialement par rapport au couvercle (5).

8. Bouilloire selon l'une quelconque des revendications 2 à 7, **caractérisée en ce que** le bouton poussoir (20) comporte un bouton externe (22) de verrouillage et un bouton interne (23) de déverrouillage du couvercle (5).

9. Bouilloire selon la revendication 8 **caractérisée en ce que** le couvercle (5) comporte un dispositif de maintien du bouton externe (22) dans la position de verrouillage et **en ce que** le bouton interne (23) agit sur le dispositif de maintien pour libérer le bouton externe (22).

## Patentansprüche

1. Wasserkocher (1), bestehend aus einem Behälter (3), einem Deckel (5) und einer Vorrichtung zur Verriegelung des Deckels (5) am Behälter (3), mit ersten Verriegelungsmitteln (11) am Behälter (3) und komplementären, am Deckel (5) befestigten zweiten Verriegelungsmitteln (12), die in Relation zum besagten Deckel (5) beweglich sind, und zwar zwischen einer verriegelten Position des Deckels (5), bei der die genannten zweiten Verriegelungsmittel (12) in die ersten Verriegelungsmittel (11) eingreifen, und einer entriegelten Position, bei welcher der Deckel (5) freigegeben wird, wobei die besagte Verriegelungsvorrichtung ein Betätigungselement (20) für die zweiten Verriegelungsmittel (12) aufweist, das am Deckel (5) angeordnet ist, **dadurch gekennzeichnet, dass** das Betätigungselement (20) im Deckel (5) versenkt ist, wenn sich die zweiten Verriegelungsmittel (12) in der verriegelten Position befinden, und **dadurch gekennzeichnet, dass** das Betätigungselement (20) aus dem Deckel (5) hervorsteht, um ein Greifelement zu bilden, wenn sich die zweiten Verriegelungsmittel (12) in entriegelter Position befinden.

2. Wasserkocher (1) nach Anspruch 1, **dadurch gekennzeichnet, dass** es sich bei dem Betätigungselement um einen Druckschalter (20) handelt.

3. Wasserkocher (1) nach Anspruch 2, **dadurch gekennzeichnet, dass** der Behälter (3) eine vertikale Achse (8) aufweist und dass der Druckschalter (20) über eine im Wesentlichen parallel zur vertikalen Achse (8) verlaufende Translationsbewegung betätigt wird, um den Deckel (5) des Behälters (3) zu verriegeln oder zu entriegeln.

4. Wasserkocher (1) nach einem der Ansprüche 1 bis 3, **dadurch gekennzeichnet, dass** der Deckel (5) dazu vorgesehen ist, am Behälter (3) gemäß einer im Wesentlichen parallel zur vertikalen Achse (8) des Behälters (3) verlaufenden Translationsbewegung angebracht zu werden.

5. Wasserkocher (1) nach einem der Ansprüche 2 bis 4, **dadurch gekennzeichnet, dass** die Verriegelungsvorrichtung einen Träger (32) und eine Haube (33) umfasst, die jeweils einen Führungsbereich (38, 34) für den Druckschalter (20) aufweisen.

6. Wasserkocher (1) nach einem der Ansprüche 1 bis 5, **dadurch gekennzeichnet, dass** der Behälter (3) radiale Fortsätze (11) aufweist, welche die komplementären ersten Verriegelungsmittel darstellen.

7. Wasserkocher nach einem der Ansprüche 1 bis 6, **dadurch gekennzeichnet, dass** die komplementären zweiten Verriegelungsmittel radial zum Deckel (5) bewegliche Arme (60) aufweisen.

8. Wasserkocher nach einem der Ansprüche 2 bis 7, **dadurch gekennzeichnet, dass** der Druckschalter (20) einen äußeren Schalter (22) zur Verriegelung und einen innenliegenden Schalter (23) zur Entriegelung des Deckels (5) aufweist.

9. Wasserkocher nach Anspruch 8, **dadurch gekennzeichnet, dass** der Deckel (5) eine Haltevorrichtung für den äußeren Schalter (22) in der verriegelten Position aufweist und dass der innenliegende Schalter (23) auf die Haltevorrichtung einwirkt, um den äußeren Schalter (22) freizugeben.

## Claims

1. A kettle (1) comprising a receptacle (3), a lid (5) and a device for locking the lid (5) on the receptacle (3) containing a first means of locking (11) located on the receptacle (3) and a second additional locking means (12) attached to the lid (5), moveable with respect to said lid (5) between a locked position of the lid (5) wherein said second locking means (12) is engaged with the first locking means (11) and an unlocked position wherein the lid (5) is released, said locking device containing a member to control (20) the second locking means (12) and arranged on the lid (5), **characterised in that** the control member (20) is integrated into the lid (5) when the second locking means (12) is in the locked position and **in that** the control member (20) protrudes above the lid (5) to form a gripping member when the second locking means (12) is in the unlocked position.

2. A kettle (1) according to claim 1, **characterised in that** the control member is made up of a push button (20).

3. A kettle (1) according to claim 2, **characterised in that** the receptacle (3) contains a vertical axis (8) and **in that** the push button (20) is operated in a translation movement substantially parallel to the vertical axis (8) to lock or unlock the lid (5) of the receptacle (3).

4. A kettle (1) according to any one of claims 1 to 3, **characterised in that** the lid (5) is designed to be assembled on the receptacle (3) in a translation movement substantially parallel to the vertical axis (8) of the receptacle (3).

5. A kettle (1) according to any one of claims 2 to 4, **characterised in that** the locking device contains a support (32) and a cover (33), each including a guidance area (38, 34) for the push button (20).

6. A kettle (1) according to any one of claims 1 to 5, **characterised in that** the receptacle (3) contains radial protrusions (11) which form the first additional locking means.

7. A kettle according to any one claims 1 to 6, **characterised in that** the second additional locking means contain arms (60) radially moveable in relation to the lid (5).

8. A kettle according to any one of claims 2 to 7, **characterised in that** the push button (20) contains an external button (22) to lock and an internal button (23) to unlock the lid (5).

9. A kettle according to claim 8 **characterised in that** the lid (5) contains a device to retain the external button (22) in the locked position and **in that** the internal button (23) acts on the retention device to release the external button (22).
